Europäisches Patentamt

European Patent Office

Office européen des brevets

(19)

(11) Numéro de publication : **0 577 483 B1**

(12) **FASCICULE DE BREVET EUROPEEN**

(45) Date de publication du fascicule du brevet :
01.03.95 Bulletin 95/09

(51) Int. Cl.$^6$ : **G06F 7/50**

(21) Numéro de dépôt : **93401642.9**

(22) Date de dépôt : **25.06.93**

(54) **Procédé pour effectuer des calculs numériques, et unité arithmétique pour la mise en oeuvre de ce procédé.**

(30) Priorité : **03.07.92 FR 9208235**

(43) Date de publication de la demande :
**05.01.94 Bulletin 94/01**

(45) Mention de la délivrance du brevet :
**01.03.95 Bulletin 95/09**

(84) Etats contractants désignés :
**DE FR GB IT**

(56) Documents cités :
**IEEE TRANSACTIONS ON COMPUTERS vol. C-31, no. 3, Mars 1982, NEW YORK US pages260 - 264 BRENT ET AL 'A Regular Layout for Parallel Adders'**

(56) Documents cités :
**19TH ASILOMAR CONFERENCE ON CIR- CUITS, SYSTEMS & COMPUTERS 6 Novembre 1985,IEEE, NY, US pages 186 - 191 WEI ET AL 'Time-Optimal Design of a CMOS Adder' PROC. OF THE IEEE 1988 CUSTOM IC CONFE- RENCE 16 Mai 1988, IEEE, NY, US pages1751 - 1756 , XP000011200 HWANG ET AL 'A high- speed dynamically reconfigurable 32-BIT CMOS ADDER'**

(73) Titulaire : **SGS-THOMSON MICROELECTRONICS S.A. 7, Avenue Galliéni F-94250 Gentilly (FR)**

(72) Inventeur : **Curtet, Joel André 43 A Quai du Drac F-38600 Fontaine (FR)**

(74) Mandataire : **Schmit, Christian Norbert Marie et al 7, rue Le Sueur F-75116 Paris (FR)**

EP 0 577 483 B1

## Description

La présente invention concerne un procédé pour effectuer des calculs numériques dans un circuit électronique. L'invention concerne également une unité arithmétique pour la mise en oeuvre de ce procédé.

Un objectif principal de l'évolution des technologies utilisées dans les circuits intégrés est d'augmenter les vitesses de traitement. Un domaine particulièrement concerné par cette évolution est le traitement numérique de données, notamment par les micro-contrôleurs ou micro-processeurs et les processeurs de traitement de signal (DSP, de "Digital Signal Processor"). Ces types de circuit comportent toujours une Unité Arithmétique et Logique (UAL), qui constitue souvent le chemin critique des données déterminant la fréquence maximale à laquelle peut fonctionner le circuit.

Beaucoup de circuits actuels comportent une UAL qui effectue des calculs logiques ou arithmétiques entre deux opérandes à 32 bits, et génère un résultat sur 32 bits. Cependant, certains calculs peuvent s'effectuer sur des opérandes à 16 bits (non nécessité de la précision maximale, gestion d'opérandes logiques sur 16 bits, etc.). L'UAL ne fonctionne plus alors que sur 16 bits, et une moitié de celle-ci reste donc inactive : seule la moitié de la puissance de calcul de l'UAL est alors utilisée.

Une des fonctionnalités les plus contraignantes en termes de temps de calcul est l'addition/soustraction arithmétique, et plus particulièrement la propagation de la retenue dans une telle opération.

La façon la plus classique de réaliser une addition binaire sur n bits entre deux opérandes A (An-1 An-2 .. A1 A0) et B (Bn-1 Bn-2 .. B1 B0) consiste à propager la retenue linéairement, d'un bit vers le bit suivant, en utilisant des additionneurs élémentaires. Les additionneurs élémentaires effectuent, pour chaque bit, les deux opérations suivantes :

$$Si = Ai \wedge Bi \wedge Ci - 1$$
$$Ci = (Ai.Bi) + ((Ai \wedge Bi).Ci - 1)$$

avec :

Ai, Bi : i-ème bit de l'opérande A, respectivement B ;

Si : i-ème bit du résultat de l'addition (S=A+B) ;

Ci : retenue générée par l'addition élémentaire en position i ;

"^" : OU exclusif logique ;

"." : ET logique ; et

"+" : OU logique.

Par cette méthode, on peut estimer le temps nécessaire pour réaliser une addition binaire sur N bits par : T(N) = N x T1, où T1 représente le temps nécessaire à chaque additionneur élémentaire pour calculer la retenue Ci en fonction de Ci-1, Ai, Bi. On voit que ce temps est entièrement déterminé par le mode de propagation en série de la retenue.

Toutefois, la fonction "propagation de retenue" peut être réalisée de façon plus rapide : la propagation en série est remplacée par une propagation en parallèle. Il existe cependant différentes façons de réaliser cette parallélisation : de nos jours, les principales méthodes utilisées dans les circuits réalisés en technologie CMOS sont :

- sélection de retenue,
- discrétisation de la propagation par utilisation d'opérateurs de concaténation.

La méthode par sélection de retenue (Carry Select) consiste à subdiviser l'opération sur N bits en utilisant par exemple trois sous-blocs additionneurs fonctionnant chacun sur N/2 bits (on suppose ici N pair). Le premier sous-bloc additionneur effectue l'addition en mode de propagation de retenue linéaire sur les N/2 bits de poids faible des opérandes pendant que les deux autres sous-blocs additionneurs effectuent parallèlement l'addition sur les N/2 bits de poids fort des opérandes, le deuxième sous-bloc supposant que la retenue sortante du premier sous-bloc vaut 0 tandis que le troisième sous-bloc suppose que cette retenue vaut 1. Ensuite, la retenue sortant effectivement du premier sous-bloc additionneur commande un multiplexeur qui permet de sélectionner celui des deux résultats issus des deuxième et troisième sous-blocs additionneurs qu'il convient de considérer. Certains des calculs se réalisant en parallèle, le temps de calcul d'une addition N bit par la méthode de sélection de retenue peut être estimé par :

$$T'(N) = N/2 * T'1 + T'0$$

où T'1 est égal au T1 de l'additionneur élémentaire à propagation linéaire et T'0 est le temps nécessaire à la sélection entre les deux résultats possibles pour la retenue intermédiaire. Si on néglige T'0, T'(N) (Carry Select) est de l'ordre de la moitié de T(N) (propagation linéaire). Notons que le principe "Carry Select" peut être généralisé pour optimiser le temps de propagation : on peut scinder une addition sur N bits en plusieurs additions sur des nombres de bits distincts. Par exemple, une addition sur 32 bits peut être réalisée avec cinq sous-blocs de taille croissante : 3, 5, 6, 8, 10.

Typiquement, avec un tel additionneur "Carry Select", une addition sur 32 bits s'effectue en 1,4 fois moins de temps qu'avec l'équivalent à propagation linéaire.

Une méthode encore plus performante pour réaliser une addition sur N bits consiste à utiliser les principes de base décrits par BRENT et KUNG ("A Regular Layout for Parallel Adders" IEEE Transactions on Computers, Vol. C-31, n° 3, Mars 1982) : l'addition binaire sur N bits peut être transformée en un calcul parallèle en utilisant l'opérateur de concaténation "o" défini par :

$$(gl,pl) \; o \; (gr, pr) \; = \; (gl + pl.gr, pl.pr).$$

Considérons, pour chaque bit en position i, les termes :

"generate"  : $gi = Ai.Bi$ ; et

"propagate"  : $pi = Ai{\wedge}Bi$

La retenue sortante pour chaque bit est alors :

$Ci = Gi$ pour $i = 0, ..., N-1$

avec $(Gi,Pi) = (gi,pi)$    pour $i = 0$ ; et

$(Gi,Pi) = (gi,pi) \; o \; (Gi-1,Pi-1)$ pour $0 < i < N$

La retenue entrante Cin étant déterminée, on obtient chaque bit de somme :

$$S0 \; = \; p0 {\wedge} Cin \; ; \; et$$

$$Si \; = \; pi {\wedge} Ci - 1 \text{ pour } 0 < i < N$$

L'opérateur "o" étant associatif (mais non commutatif), on peut écrire :

$$(Gi,Pi) = (gi,pi) \; o \; (gi-1, \; pi-1) \; o \; ... \; o \; (g0,p0)$$
$$= (gi,pi) \; o \; ... \; o \; (gm,pm) \; o \; (gm-1,pm-1) \; o \; ... \; o \; (g0,p0)$$
$$= \quad (Gi,m \; ; \; Pi,m) \qquad o \qquad (Gm-1,0 \; ; \; Pm-1,0)$$

avec :

$(Gi,m ; Pi,m) = (gm,pm)$    si $i = m$ ; et

$(Gi,m ; Pi,m) = (gi,pi) \; o \; (Gi-1,m ; Pi-1,m)$ si $i > m$.

Le calcul de $(Gi,Pi)$ s'effectue donc à partir de deux termes $(Gi,m ; Pi,m)$ et $(Gm-1,0 ; Pm-1, 0)$ qui sont fonctionnellement du même type : ils sont fonction de i-m+1 (respectivement m) bits d'entrée consécutifs et nécessitent i-m (respectivement m+1) applications de l'opérateur "o". En conséquence, ils peuvent être calculés par le même type de circuit.

On peut donc améliorer la décomposition de BRENT et KUNG classique dans lequel chaque bloc de génération de retenue est divisé de façon récursive en deux sous-blocs d'égale dimension m = N/2. L'amélioration passe par une division récursive en sous-blocs de dimension inégale et par l'utilisation de circuits d'amplification : ceci minimise le délai de propagation des retenues. Les fondements de ce principe d'optimisation ont été publiés en 1986 par B. W. Y.WEI, C. THOMPSON, Y-F. CHEN dans l'article "Time-Optimal Design of a CMOS Adder" (publication IEEE de 1986 n° CH2331-7/86/0000/0186$01.00 à la suite de la conférence ACSC-85 : Asilomar Circuit System and Computer, page 186). La mise en oeuvre de cet algorithme conduit à des temps d'addition qui ne dépendent pas linéairement du nombre de bits (par exemple, une addition sur 32 bits est seulement 1,15 fois plus lente qu'une addition sur 16 bits).

Typiquement, avec un tel additionneur, une addition sur 32 bits s'effectue en 2,3 fois moins de temps qu'avec l'équivalent à propagation de retenue linéaire.

Lorsqu'on souhaite qu'un même opérateur à propagation de retenue linéaire d'une unité arithmétique et logique assure sélectivement soit une opération sur 32 bits soit deux opérations parallèles sur 16 bits, on peut le réaliser sous la forme d'un opérateur à 32 bits en montant un multiplexeur de sélection entre les additionneurs élémentaires de rangs respectifs 15 et 16.

La commande du multiplexeur de sélection permet alors de sélectionner si la retenue entrante dans le demi-opérateur correspondant aux 16 bits de poids fort est la retenue sortante du demi-opérateur correspondant aux 16 bits de poids faible fournie à une entrée du multiplexeur de sélection, auquel cas on réalise une addition "normale" sur 32 bits ; ou si cette retenue entrante est un bit de retenue extérieur fourni à une autre entrée du multiplexeur de sélection, auquel cas on réalise deux additions parallèles indépendantes sur 16 bits.

Cette solution simple peut aussi être appliquée à un additionneur à sélection de retenue, avec la restriction suivante : pour insérer facilement un multiplexeur de sélection de mode (32 bits ou 2 x 16 bits) il faut que le bit de rang 15 se situe à la sortie d'un des sous-blocs de ce type d'opérateur. La commande de ce multiplexeur pourra ainsi être facilement adaptée pour que la retenue entrante du demi-opérateur correspondant aux 16 bits de poids fort soit :

- ou la retenue sortante de l'autre demi-opérateur : on réalise alors une addition sur 32 bits ;

- ou un bit de retenue extérieur : on réalise alors deux additions parallèles indépendantes sur 16 bits.

Cette solution impose cependant une contrainte pour le choix optimal de la taille des sous-blocs.

Mais, dans une UAL de type BRENT et KUNG optimisée, une telle façon de sélectionner les modes de fonctionnement de l'opérateur ne peut pas être appliquée sans perdre le bénéfice de la mise en oeuvre de cet algorithme : cela reviendrait à réaliser deux additionneurs de type BRENT et KUNG montés en série qui, lorsqu'ils fonctionneraient en mode 32 bits auraient un temps de propagation de retenue nettement supérieur à celui d'un simple additionneur de type BRENT et KUNG à 32 bits (typiquement 1,5 fois supérieur).

Une autre possibilité a été publiée dans Proceedings of the IEEE 1988 Custom IC conference, 16 Mai 1988, IEE, New York, USA, pages 17.5.1 à 17.5.6, XP000011200, HWANG et al : "A high speed dynamically reconfigurable 32-bit CMOS adder" qui décrit un tel circuit mais qui est de structure différente.

Il existe donc un besoin pour un procédé permettant, en appliquant un algorithme de propagation de retenue optimal, notamment l'algorithme de BRENT et KUNG optimisé, de réaliser avec un même opérateur soit une opération sur n+m bits soit deux opérations parallèles respectivement sur n bits et sur m bits, avec n = m = 16 dans un exemple typique.

Le but de la présente invention est de répondre à ce besoin.

L'invention propose ainsi, comme défini dans la revendication 1, un procédé pour effectuer des calculs numériques au moyen d'un opérateur adapté pour recevoir deux opérandes à N bits et produire un résultat à N bits, l'opérateur comportant un circuit de préconditionnement, un générateur de retenues et un circuit de sommation montés en cascade, dans lequel le circuit de préconditionnement comprend N cellules montées en parallèle, chacune de ces N cellules recevant deux bits de même rang des deux opérandes à N bits et produisant des première et deuxième combinaisons logiques de ces deux bits de même rang, dans lequel le générateur de retenues reçoit les combinaisons logiques issues du circuit de préconditionnement et un bit de retenue entrante et calcule N bits de retenue, et dans lequel le circuit de sommation comprend N additionneurs élémentaires montés en parallèle, chacun de ces N additionneurs élémentaires recevant une des premières combinaisons logiques issue d'une cellule correspondante du circuit de préconditionnement et un des bits de retenue issu du générateur de retenues et produisant l'un des bits du résultat à N bits en effectuant une opération logique OU exclusif entre cette première combinaison logique et ce bit de retenue, caractérisé en ce qu'on utilise une des N cellules du circuit de préconditionnement comme cellule de sélection pour commander sélectivement deux modes de fonctionnement de l'opérateur, à savoir un premier mode de fonctionnement dans lequel le nombre à N-1 bits constitué par les bits du résultat à N bits sauf le bit dont le rang correspond à celui de la cellule de sélection est le résultat d'une opération effectuée sur les deux nombres à N-1 bits constitués chacun par les bits d'un des opérandes à N bits sauf le bit dont le rang correspond à celui de la cellule de sélection, et un deuxième mode de fonctionnement dans lequel les deux nombres constitués respectivement par les bits du résultat à N bits dont le rang est inférieur à celui de la cellule de sélection et par les bits du résultat à N bits dont le rang est supérieur à celui de la cellule de sélection sont les résultats de deux opérations effectuées en parallèle respectivement sur les deux nombres constitués chacun par les bits d'un des opérandes à N bits dont le rang est inférieur à celui de la cellule de sélection et sur les deux nombres constitués chacun par les bits d'un des opérandes à N bits dont le rang est supérieur à celui de la cellule de sélection.

On utilise ainsi de façon optimale les ressources de calcul de l'opérateur. Dans le cas typique où N = 33 et où la cellule de sélection est la 17-ième cellule (ou cellule de rang 16) du circuit de préconditionnement, le procédé permet de diminuer sensiblement de 50 % le temps nécessaire à l'exécution d'un programme traitant des opérandes à 16 bits et pour lequel deux opérations sur 16 bits peuvent être effectuées simultanément.

L'invention permet ainsi de réaliser un opérateur optimisé à 33 bits, notamment un additionneur du type BRENT et KUNG, qui, par une commande appropriée de la cellule de sélection et sans modification du fonctionnement du générateur de retenues, permet

- soit de considérer la cellule de sélection comme transparente et de réaliser ainsi des opérations sur 32 bits,
- soit de considérer la cellule de sélection comme un délimiteur qui sépare l'additionneur en deux sous-additionneurs indépendants qui réalisent des additions sur 16 bits, qui force la retenue entrante dans le sous-additionneur sur 16 bits de poids le plus fort, et qui délivre en sortie la retenue sortante du sous-additionneur sur 16 bits de poids le plus faible.

Cette solution comporte les avantages suivants :

- on conserve la régularité de l'implantation des cellules qui constituent le générateur de retenues dans l'implémentation Brent et Kung optimisée (pas d'ajout de cellules de multiplexage, par exemple, qui briserait cette régularité) ;
- l'augmentation de surface reste minime (1/32 soit 3,12 %) ;
- on utilise le même algorithme d'optimisation pour scinder le générateur de retenues à 33 bits en blocs de dimensions inégales ;
- la perte en temps de propagation pour un calcul sur 33 bits (conduisant à un résultat sur 32 bits) est négligeable : de l'ordre de 1,9 % (elle serait de 1/32 soit 3,12 % pour le passage d'un additionneur à propagation de retenue linéaire de 32 bits à 33 bits, sans compter le temps de traversée du multiplexeur supplémentaire).

Suivant le second aspect de l'invention comme défini dans la revendication 12, une unité arithmétique comprenant un opérateur à N bits du type exposé ci-dessus est caractérisée en ce que, n et m désignant des nombres entiers tels que n + 1 + m = N, les n premiers bits des deux opérandes à N bits sont fournis aux cellules correspondantes du circuit de préconditionnement par l'intermédiaire de deux registres d'entrée à n bits, les m derniers bits des deux opérandes à N bits sont fournis aux cellules correspondantes du circuit de préconditionnement par l'intermédiaire de deux registres d'entrée à m bits, les n premiers bits du résultat à N bits sont adressés à un registre de sortie à n bits par les additionneurs élémentaires correspondants du circuit de sommation, et les m derniers bits du résultat à N bits sont adressés à un registre de sortie à m bits par les additionneurs élémentaires correspondants du circuit de sommation, et en ce que la (n+1)-ième cellule du circuit de préconditionnement est une cellule de sélection pouvant commander sélectivement deux modes de fonctionnement de l'opérateur, à savoir un premier mode de fonctionnement dans lequel le nombre à n + m = N-1 bits constitué par la réunion des bits des deux registres de sortie est le résultat d'une opération effectuée sur les deux nombres à n + m = N-1 bits constitués chacun par la réunion des bits d'un registre d'entrée à n bits et des bits d'un registre d'entrée à m bits, et un deuxième mode de fonctionnement dans lequel les deux nombres constitués respectivement par les bits du registre de sortie à n bits et par les bits du registre de sortie à m bits sont les résultats de deux opérations effectuées en parallèle respectivement sur les deux nombres constitués chacun par les bits des deux registres d'entrée à n bits et sur les deux nombres constitués chacun par les bits des deux registres d'entrée à m bits.

Cette unité arithmétique est conçue pour la mise en oeuvre du procédé ci-dessus.

D'autres particularités et avantages de l'invention apparaîtront dans la description ci-après d'un exemple de réalisation préféré et non limitatif, lue conjointement aux dessins annexés, dans lesquels :

- la figure 1 est un schéma synoptique d'une unité arithmétique selon l'invention ; et
- la figure 2 est un schéma électrique d'une cellule d'un circuit de préconditionnement inclus dans l'unité arithmétique de la figure 1.

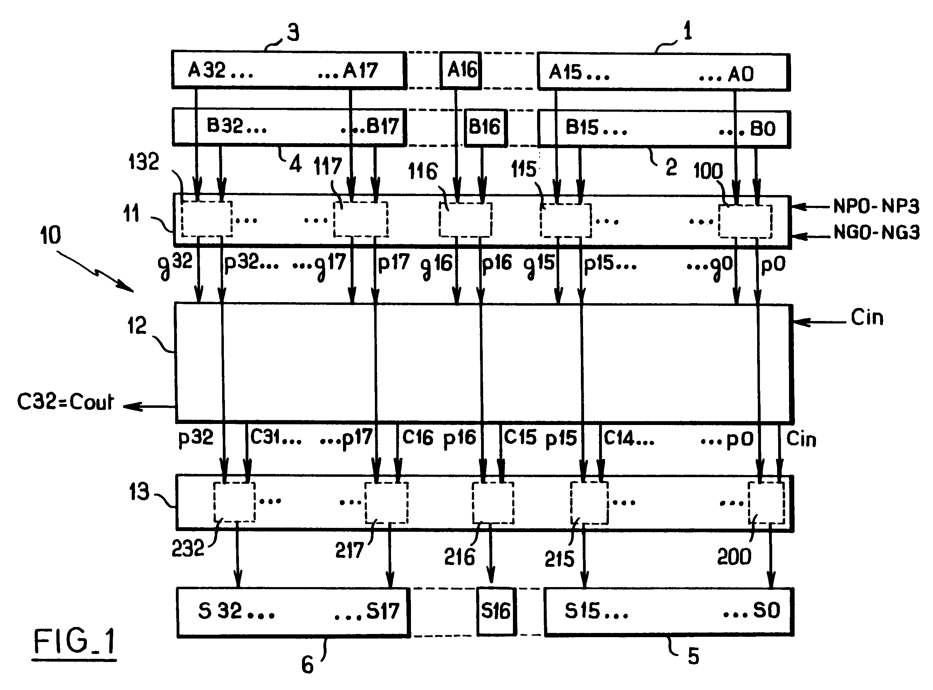

En référence à la figure 1, une unité arithmétique selon l'invention comprend un opérateur 10 adapté pour recevoir deux opérandes à N bits A32 A31...A0, B32 B31...B0 et produire un résultat à N bits S32 S31...S0. Dans l'exemple représenté, on a N = 33.

L'opérateur 10 comporte un circuit de préconditionnement 11, un générateur de retenues 12 et un circuit de sommation 13 montés en cascade.

Le circuit de préconditionnement 11 comprend N cellules identiques 100 à 132 montées en parallèle. Chacune de ces N cellules 100 à 132 reçoit deux bits de même rang A0,B0 à A32,B32 des deux opérandes à N bits et produit deux combinaisons logiques p0,g0 à p32,g32 de ces deux bits de même rang déterminées par huit signaux binaires de commande NP0 à NP3, NG0 à NG3.

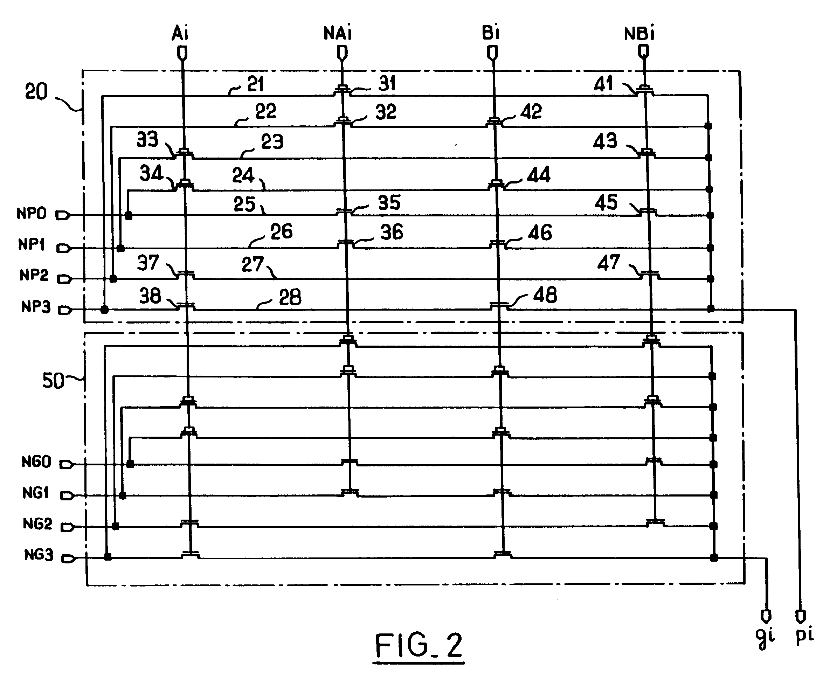

La figure 2 représente un exemple de cellule utilisable dans le circuit de préconditionnement 11. Cette cellule comprend un module 20 commandé par les signaux NP0 à NP3 pour produire la première combinaison logique pi et un module identique 50 commandé par les signaux NG0 à NG3 pour produire la deuxième combinaison logique gi. Le module 20 comprend huit lignes à transistors MOS 21 à 28 reliées à la sortie de la cellule délivrant la première combinaison logique pi. Ai et Bi désignant les deux bits de rang correspondant des deux opérandes à N bits, on désigne par NAi et NBi les inverses logiques des bits Ai et Bi obtenus par une simple porte inverseuse non représentée. La ligne 21 reçoit le signal binaire de commande NP3 et comporte les trajets source-drain de deux transistors MOS à canal p 31, 41 dont les grilles reçoivent respectivement les bits NAi et NBi. La ligne 22 reçoit le signal binaire de commande NP2 et comporte les trajets source-drain de deux transistors MOS à canal p 32, 42 dont les grilles reçoivent respectivement les bits NAi et Bi. La ligne 23 reçoit le signal binaire de commande NP1 et comporte les trajets source-drain de deux transistors MOS à canal p 33, 43 dont les grilles reçoivent respectivement les bits Ai et NBi. La ligne 24 reçoit le signal binaire de commande NP0 et comporte les trajets source-drain de deux transistors MOS à canal p 34, 44 dont les grilles reçoivent respectivement les bits Ai et Bi. La ligne 25 reçoit le signal binaire de commande NP0 et comporte les trajets source-drain de deux transistors MOS à canal n 35, 45 dont les grilles reçoivent respectivement les bits NAi et NBi. La ligne 26 reçoit le signal binaire de commande NP1 et comporte les trajets source-drain de deux transistors MOS à canal n 36, 46 dont les grilles reçoivent respectivement les bits NAi et Bi. La ligne 27 reçoit le signal binaire de commande NP2 et comporte les trajets source-drain de deux transistors MOS à canal n 37, 47 dont les grilles reçoivent respectivement les bits Ai et NBi. La ligne 28 reçoit le signal binaire de commande NP3 et comporte les trajets source-drain de deux transistors MOS à canal n 38, 48 dont les grilles reçoivent respectivement les bits Ai et Bi. Ainsi, la sortie pi du module 20 est la combinaison logique suivante :

$$pi = NP0 \cdot NAi \cdot NBi$$
$$+ NP1 \cdot NAi \cdot Bi$$
$$+ NP2 \cdot Ai \cdot NBi \qquad (1)$$
$$+ NP3 \cdot Ai \cdot Bi$$

où "+" désigne l'opération logique OU et "." l'opération logique ET.
De même, le module 50 délivre une combinaison logique gi égale à

$$gi = NG0 \cdot NAi \cdot NBi$$
$$+ NG1 \cdot NAi \cdot Bi$$
$$+ NG2 \cdot Ai \cdot NBi \qquad (2)$$
$$+ NG3 \cdot Ai \cdot Bi$$

Les combinaisons logiques pi,gi produites par les cellules 100 à 132 peuvent donc être sélectionnées en fixant les valeurs des signaux de commande NP0 à NP3, NG0 à NG3.

Le générateur de retenues 12 reçoit les combinaisons logiques issues du circuit de préconditionnement 11 et un bit de retenue entrante Cin et calcule N bits de retenue C0 à C32. Le générateur de retenues 12 est réalisé de la manière décrite dans l'article "Time-Optimal Design of a CMOS Adder" mentionné plus haut de façon à mettre en oeuvre l'algorithme de BRENT et KUNG optimisé sur N = 33 bits. Le dernier bit de retenue C32 calculé par le générateur de retenues 12 est égal au bit de retenue sortante Cout de l'opérateur 10.

Le circuit de sommation 13 comprend N additionneurs élémentaires 200 à 232 montés en parallèle. Chacun de ces N additionneurs élémentaires 200 à 232 est constitué par une porte OU exclusif recevant une des premières combinaisons logiques p0 à p32 issue d'une cellule correspondante du circuit de préconditionnement 11 et un des bits de retenue Cin, C0 à C31 issu du générateur de retenues 12 et produisant l'un des bits S0 à S32 du résultat à N bits. Le bit de rang 0 du résultat à N bits est égal à $p0^{\wedge}Cin$, où "^" désigne l'opération logique OU exclusif, tandis que le bit de rang i>0 du résultat à N bits est égal à $pi^{\wedge}Ci\text{-}1$.

L'unité arithmétique représentée à la figure 1 comprend en outre deux registres d'entrée à n bits 1,2, deux registres d'entrée à m bits 3,4, un registre de sortie à n bits 5 et un registre de sortie à m bits 6. n et m sont des nombres entiers tels que n+1+m = N. Dans l'exemple représenté, N étant impair (N = 33), on a n = m = (N-1)/2 = 16. Les n premiers bits A0 à A15, B0 à B15 (bits de poids faible) des deux opérandes à N bits sont fournis aux cellules correspondantes 100 à 115 du circuit de préconditionnement 11 par l'intermédiaire des deux registres d'entrée à n bits 1, 2. Les m derniers bits A17 à A32, B17 à B32 (bits de poids fort) des deux opérandes à N bits sont fournis aux cellules correspondantes 117 à 132 du circuit de préconditionnement 11 par l'intermédiaire des deux registres d'entrée à m bits 3, 4. Les n premiers bits S0 à S15 du résultat à N bits sont adressés au registre de sortie à n bits 5 par les additionneurs élémentaires correspondants 200 à 215 du circuit de sommation 13. Les m derniers bits S17 à S32 du résultat à N bits sont adressés au registre de sortie à m bits 6 par les additionneurs élémentaires correspondants 217 à 232 du circuit de sommation 13.

La (n+1)-ième cellule, ou cellule de rang n, du circuit de préconditionnement 11 est utilisée comme cellule de sélection 116 pour commander sélectivement deux modes de fonctionnement de l'opérateur 10, qui sont détaillés ci-après.

Dans un premier mode de fonctionnement à N-1 bits, le nombre à n + m = N-1 bits S32 S31...S17 S15 S14...S0 constitué par la réunion des bits de deux registres de sortie 5, 6 est le résultat d'une opération effectuée sur le nombre à n + m = N-1 bits A32 A31...A17 A15 A14...A0 constitué par la réunion des bits du registre d'entrée à n bits 1 et des bits du registre d'entrée à m bits 3 et sur le nombre à n + m = N - 1 bits B32 B31...B17 B15 B14...B0 constitué par la réunion des bits du registre d'entrée à n bits 2 et des bits du registre d'entrée à m bits 4. Le nombre à N-1 bits S32 S31...S17 S15 S14...S0 constitué par les bits du résultat à N bits sauf le bit S16 dont le rang correspond à celui de la cellule de sélection 116 est alors le résultat d'une opération effectuée sur les deux nombres à N-1 bits A32 A31...A17 A15 A14...A0 et B32 B31...B17 B15 B14...B0 constitués chacun par les bits d'un des opérandes à N bits sauf le bit A16, B16 dont le rang correspond à celui de la cellule de sélection 116.

Dans le deuxième mode de fonctionnement à n et m bits, les deux nombres S15 S14...S0 et S32 S31...S17 constitués respectivement par les bits du registre de sortie à n bits 5 et par les bits du registre de sortie à m bits 6 sont les résultats de deux opérations effectuées en parallèle respectivement sur les deux nombres A15 A14...A0 et B15 B14...B0 constitués chacun par les bits d'un des deux registres d'entrée à n bits 1, 2 et sur les deux nombres A32 A31...A17 et B32 B31...B17 constitués chacun par les bits d'un des deux registres d'entrée à m bits 3, 4. Les deux nombres S15 S14...S0 et S32 S31...S17 constitués respectivement par les bits du résultat à N bits dont le rang est inférieur à celui de la cellule de sélection 116 et par les bits du résultat à N bits dont le rang est supérieur à celui de la cellule de sélection 116 sont alors les résultats de deux opérations effectuées en parallèle respectivement sur les deux nombres à n bits A15 A14...A0, B15 B14...B0 constitués chacun par les bits d'un des opérandes à N bits dont le rang est inférieur à celui de la cellule de sélection 116 et sur les deux nombres à m bits A32 A31...A17, B32 B31...B17 constitués chacun par les bits d'un des opérandes à N bits dont le rang est supérieur à celui de la cellule de sélection 116.

Pour que l'opérateur 10 effectue des additions, chacune des cellules 100 à 115 ; 117 à 132 du circuit de préconditionnement 11 autres que la cellule de sélection 116 est commandée de façon que ses combinaisons logiques pi,gi soient telles que pi = Ai^Bi et gi = Ai.Bi. Ceci est obtenu en imposant NP0 = NP3 = NG0 = NG1 = NG2 = 0 et NP1 = NP2 = NG3 = 1 (formules 1 et 2) pour chacune de ces cellules 100 à 115; 117 à 132. Dans ces conditions, on sélectionne le premier mode de fonctionnement de l'opérateur 10 en commandant la cellule de sélection 116 de façon que sa première combinaison logique p16 soit égale à 1 et que sa deuxième combinaison logique g16 soit égale à 0, et on sélectionne le deuxième mode de fonctionnement de l'opérateur 10 en commandant la cellule de sélection 116 de façon que ses combinaisons logiques p16, g16 soient égales à 0.

La sélection entre les deux modes de fonctionnement peut alors s'effectuer, par exemple, en imposant soit NP0 = NP1 = NP2 = NP3 = 1 et NG0 = NG1 = NG2 = NG3 = 0 pour la cellule de sélection 116 dans le premier mode, soit NP0 = NP1 = NP2 = NP3 = 0 et NG0 = NG1 = NG2 = NG3 = 0 pour la cellule de sélection 116 dans le deuxième mode.

Mais lorsque l'opérateur 10 effectue des additions, il est préférable de commander en outre la cellule de sélection 116 de façon que p16 = A16^B16 (NP0 = NP3 = 0, NP1 = NP2 = 1) et que g16 = A16.B16 (NG0 = NG1 = NG2 = 0, NG3 = 1). On sélectionne alors le premier mode de fonctionnement de l'opérateur 10 en affectant des valeurs inverses l'une de l'autre aux deux bits A16, B16 des opérandes à N bits, et on sélectionne le deuxième mode de fonctionnement de l'opérateur 10 en affectant des valeurs nulles aux deux bits A16, B16 des opérandes à N bits. Ceci permet d'adresser les mêmes signaux binaires de commande NP0 à NP3, NG0 à NG3 aux N cellules du circuit de préconditionnement 11. Dans le deuxième mode de fonctionnement, la valeur du bit S16 du résultat à N bits s'interprète alors comme étant la retenue sortante de l'addition effectuée sur les deux nombres à n bits A15 A14...A0 et B15 B14...B0, et la valeur du bit de retenue sortante C32 = Cout s'interprète comme étant la retenue sortante de l'addition effectuée sur les deux nombres à m bits A32 A31...A17 et B32 B31...B17. Le bit de retenue entrante Cin adressé au générateur de retenues 12 représente la retenue qui vient s'ajouter, soit au résultat sur N-1 bits S32 S31...S17 S15 S14...S0 dans le premier mode de fonctionnement, soit au résultat sur n bits S15 S14...S0 fourni au registre de sortie 5 dans le deuxième mode de fonctionnement. Pour que l'opérateur 10 effectue des additions dans son deuxième mode de fonctionnement en ajoutant en outre un deuxième bit de retenue entrante C2 à l'addition effectuée sur les deux nombres A32 A31...A17, B32 B31...B17 présentés dans les registres d'entrée à m bits 3, 4, on affecte des valeurs égales à celle de ce deuxième bit de retenue entrante C2 aux deux bits A16 et B16.

Pour que l'opérateur 10 effectue des soustractions (du type A - B), chacune des cellules 100 à 115; 117 à 132 du circuit de préconditionnement 11 autres que la cellule de sélection 116 est commandée de façon que ses combinaisons logiques pi,gi soient telles que pi = Ai^NBi et gi = Ai.NBi. Ceci est obtenu en imposant NP1 = NP2 = NG0 = NG1 = NG3 = 0 et NP0 = NP3 = NG2 = 1 (formules 1 et 2) pour chacune de ces cellules 100 à 115; 117 à 132. Dans ces conditions, on sélectionne le premier mode de fonctionnement de l'opérateur 10 en commandant la cellule de sélection 116 de façon que sa première combinaison logique p16 soit égale à 1 et que sa deuxième combinaison logique g16 soit égale à 0 et en forçant le bit de retenue entrante Cin à 1, et on sélectionne le deuxième mode de fonctionnement de l'opérateur 10 en commandant la cellule de sélection 116 de façon que sa première combinaison logique p16 soit égale à 0 et que sa deuxième combinaison logique g16 soit égale à 1, Cin restant forcée à 1.

La sélection entre les deux modes de fonctionnement peut alors s'effectuer, par exemple, en imposant soit NP0 = NP1 = NP2 = NP3 = 1 et NG0 = NG1 = NG2 = NG3 = 0 pour la cellule de sélection 116 dans le premier mode, soit NP0 = NP1 = NP2 = NP3 = 0 et NG0 = NG1 = NG2 = NG3 = 1 pour la cellule de sélection 116 dans le deuxième mode.

Mais comme dans le cas de l'addition, on préfère généralement que, lorsque l'opérateur 10 effectue des soustractions, la cellule de sélection 116 reçoive des signaux binaires de commande NP0 à NP3, NG0 à NG3 identiques à ceux adressés aux autres cellules 100 à 115, 117 à 132 du circuit de préconditionnement 11. On sélectionne alors le premier mode de fonctionnement de l'opérateur 10 en affectant des valeurs identiques aux deux bits A16 et B16 des opérandes à N bits, et on sélectionne le deuxième mode de fonctionnement de l'opérateur 10 en affectant des valeurs 1 et 0 respectivement aux deux bits A16 et B16 des opérandes à N

7

bits. Dans le deuxième mode de fonctionnement, la valeur du bit S16 du résultat à N bits s'interprète alors comme étant la retenue sortante de la soustraction effectuée entre les deux nombres à n bits A15 A14...A0 et B15 B14...B0, et la valeur du bit de retenue sortante C32 = Cout s'interprète comme étant la retenue sortante de la soustraction effectuée entre les deux nombres à m bits A32 A31...A17 et B32 B31...B17.

Dans son deuxième mode de fonctionnement, on peut en outre commander l'opérateur 10 pour qu'il effectue des opérations différentes sur les nombres à n bits présentés dans les registres d'entrée 1, 2 et sur les nombres à m bits présentés dans les registres d'entrée à m bits 3, 4. Ainsi, l'opérateur 10 peut être commandé pour effectuer, dans son deuxième mode de fonctionnement, une addition entre les deux nombres A15 A14...A0, B15 B14...B0 présentés dans les registres d'entrée à n bits 1, 2 et une soustraction entre les deux nombres A32 A31...A17, B32 B31...B17 présentés dans les registres d'entrée à m bits 3, 4. On commande alors les cellules 100 à 115 du circuit de préconditionnement 11 de façon que leurs combinaisons logiques pi, gi soient telles que pi = Ai^Bi et gi = Ai.Bi (NP0 = NP3 = NG0 = NG1 = NG2 = 0, NP1 = NP2 = NG3 = 1), on commande les cellules 117 à 132 du circuit de préconditionnement 11 de façon que leurs combinaisons logiques pi,gi soient telles que pi = Ai^NBi et gi = Ai.NBi (NP0 = NP3 = NG2 = 1, NP1 = NP2 = NG0 = NG1 = NG3 = 0) et on commande la cellule de sélection 116 de façon que sa première combinaison logique p16 soit égale à zéro (par exemple NP0 = NP1 = NP2 = NP3 =0) et que sa deuxième combinaison logique g16 soit égale à 1 (par exemple NG0 = NG1 = NG2 = NG3 = 1).

De façon semblable, l'opérateur 10 peut être commandé pour effectuer, dans son deuxième mode de fonctionnement, une soustraction entre les deux nombres A15 A14...A0, B15 B14...B0 présentés dans les registres d'entrée à n bits 1, 2 et une addition entre les deux nombres A32 A31...A17, B32 B31...B17 présentés dans les registres d'entrée à m bits 3, 4. On commande alors les cellules 100 à 115 du circuit de préconditionnement 11 de façon que leurs combinaisons logiques pi,gi soient telles que pi = Ai^NBi et gi = Ai.NBi (NP0 = NP3 = NG2 = 1, NP1 = NP2 = NG0 = NG1 = NG3 = 0) et en forçant le bit de retenue entrante Cin à 1, on commande les cellules 117 à 132 du circuit de préconditionnement 11 de façon que leurs combinaisons logiques p17 à p32 soient telles que pi = Ai^Bi et gi = Ai.Bi (NP0 = NP3 = NG0 = NG1 = NG2 = 0, NP1 = NP2 = NG3 = 1), et on commande la cellule de sélection 116 de façon que ses combinaisons logiques p16, g16 soient égales à 0 (par exemple NP0 = NP1 = NP2 = NP3 = NG0 = NG1 = NG2 = NG3 = 0).

L'opérateur 10 peut également être commandé pour effectuer des opérations logiques entre des bits individuels du premier opérande à N bits A32 A31...A0 et des bits individuels correspondants du deuxième opérande à N bits B32 B31...B0. L'unité arithmétique constitue alors une unité arithmétique et logique (UAL). Pour cela, on commande les N cellules 100 à 132 du circuit de préconditionnement 11 de façon que leurs deuxièmes combinaisons logiques g0 à g32 soient toutes égales à une valeur prédéterminée, qu'on affecte aussi à Cin.

Par exemple l'opérateur 10 peut effectuer les opérations logiques suivantes entre des bits correspondants des opérandes à N bits :

- ET (Si = Ai.Bi pour i différent de 16) avec gi = g16 = Cin = 0 (NG0 = NG1 = NG2 = NG3 = 0), pi = Ai.Bi (NP0 = NP1 = NP2 = 0, NP3 = 1) et p16 indifférent ;
- OU (Si = Ai+Bi pour i différent de 16) avec gi = g16 = Cin = 1 (NG0 = NG1 = NG2 = NG3 = 1), pi = NAi.NBi (NP0 = 1, NP1 = NP2 = NP3 = 0) et p16 indifférent ; et
- OU exclusif (Si = Ai^Bi pour i différent de 16) avec gi = g16 = Cin = 0 (NG0 = NG1 = NG2 = NG3 = 0), pi = Ai^Bi (NP0 = NP3 = 0, NP1 = NP2 = 1) et p16 indifférent.

Bien qu'on ait décrit l'invention en référence à un exemple de réalisation préféré, on comprendra que cet exemple n'est pas limitatif et que diverses variantes peuvent lui être apportées sans sortir du cadre de l'invention.

Ainsi, on a décrit l'invention dans le cas préféré d'une UAL à N = 33 bits pouvant effectuer soit une opération sur 32 bits, soit deux opérations parallèles sur n = m = 16 bits, mais l'invention peut également s'appliquer avec N impair quelconque et n = m = (N-1)/2, voire avec N, n et m quelconques pourvu que N = n + 1 + m.

## Revendications

1. Procédé pour effectuer des calculs numériques au moyen d'un opérateur (10) adapté pour recevoir deux opérandes à N bits (A32 A31...A0, B32 B31...B0) et produire un résultat à N bits (S32 S31...S0), l'opérateur (10) comportant un circuit de préconditionnement (11), un générateur de retenues (12) et un circuit de sommation (13) montés en cascade, dans lequel le circuit de préconditionnement (11) comprend N cellules (100 à 132) montées en parallèle, chacune de ces N cellules recevant deux bits de même rang (A0,B0 à A32, B32) des deux opérandes à N bits et produisant des première et deuxième combinaisons logiques (p0,g0 à p32, g32) de ces deux bits de même rang déterminées par des signaux de commande (NP0 à NP3, NG0 à NG3), dans lequel le générateur de retenues (12) reçoit les combinaisons logiques issues du circuit de préconditionnement et un bit de retenue entrante (Cin) et calcule N bits de retenue (C0 à C32), et dans lequel le circuit de sommation (13) comprend N additionneurs élémentaires (200 à 232) montés en parallèle, chacun de ces N additionneurs élémentaires recevant une des premières combinaisons logiques (p0 à p32) issue d'une cellule correspondante du circuit de préconditionnement et un des bits de retenue (Cin, C0 à C31) issu du générateur de retenues et produisant l'un des bits (S0 à S32) du résultat à N bits en effectuant une opération logique OU exclusif entre cette première combinaison logique (p0 à p32) et ce bit de retenue (Cin, C0 à C31),

caractérisé en ce qu'on utilise une des N cellules du circuit de préconditionnement (11) comme cellule de sélection (116) pour commander sélectivement deux modes de fonctionnement de l'opérateur (10), à savoir un premier mode de fonctionnement dans lequel le nombre à N-1 bits (S32 S31...S17 S15 S14...S0) constitué par les bits du résultat à N bits sauf le bit (S16) dont le rang correspond à celui de la cellule de sélection (116) est le résultat d'une opération effectuée sur les deux nombres à N-1 bits (A32 A31...A17 A15 A14...A0, B32 B31...B17 B15 B14...B0) constitués chacun par les bits d'un des opérandes à N bits sauf le bit (A16, B16) dont le rang correspond à celui de la cellule de sélection (116), et un deuxième mode de fonctionnement dans lequel les deux nombres (S15 S14...S0, S32 S31...S17) constitués respectivement par les bits du résultat à N bits dont le rang est inférieur à celui de la cellule de sélection (116) et par les bits du résultat à N bits dont le rang est supérieur à celui de la cellule de sélection (116) sont les résultats de deux opérations effectuées en parallèle respectivement sur les deux nombres (A15 A14...A0, B15 B14...B0) constitués chacun par les bits d'un des opérandes à N bits dont le rang est inférieur à celui de la cellule de sélection (116) et sur les deux nombres (A32 A31...A17, B32 B31...B17) constitués chacun par les bits d'un des opérandes à N bits dont le rang est supérieur à celui de la cellule de sélection (116).

2. Procédé conforme à la revendication 1, caractérisé en ce que N est impair et la cellule de sélection (116) est la cellule de rang (N-1)/2 du circuit de préconditionnement (11).

3. Procédé conforme à la revendication 2, dans lequel N = 33.

4. Procédé conforme à l'une des revendications 1 à 3, caractérisé en ce que, pour que l'opérateur (10) effectue des additions, on commande au moins chacune des cellules (100 à 115; 117 à 132) du circuit de préconditionnement (11) autres que la cellule de sélection (116) de façon que sa première combinaison logique (p0 à p15; p17 à p32) soit obtenue par une opération logique OU exclusif entre les deux bits de rang correspondant (A0, B0 à A15, B15 ; A17, B17 à A32, B32) des deux opérandes à N bits et que sa deuxième combinaison logique (g0 à g15; g17 à g32) soit obtenue par une opération logique ET entre les deux bits de rang correspondant (A0, B0 à A15, B15 ; A17, B17 à A32, B32) des deux opérandes à N bits, on sélectionne le premier mode de fonctionnement de l'opérateur (10) en commandant la cellule de sélection (116) de façon que sa première combinaison logique (p16) soit égale à 1 et que sa deuxième combinaison logique (g16) soit égale à 0, et on sélectionne le deuxième mode de fonctionnement de l'opérateur (10) en commandant la cellule de sélection (116) de façon que ses combinaisons logiques (p16, g16) soient égales à 0.

5. Procédé conforme à la revendication 4, caractérisé en ce que, pour que l'opérateur (10) effectue des additions, on commande en outre la cellule de sélection (116) de façon que sa première combinaison logique (p16) soit obtenue par une opération logique OU exclusif entre les deux bits de rang correspondant (A16, B16) des deux opérandes à N bits et que sa deuxième combinaison logique (g16) soit obtenue par une opération logique ET entre les deux bits de rang correspondant (A16, B16) des deux opérandes à N bits, on sélectionne le premier mode de fonctionnement de l'opérateur (10) en affectant des valeurs inverses l'une de l'autre aux deux bits (A16, B16) des opérandes à N bits ayant le même rang que la cellule de sélection (116), et on sélectionne le deuxième mode de fonctionnement de l'opérateur (10) en affectant des valeurs nulles aux deux bits (A16, B16) des opérandes à N bits ayant le même rang que la cellule de sélection (116).

6. Procédé conforme à la revendication 5, caractérisé en ce que, pour que l'opérateur (10) effectue des additions dans son deuxième mode de fonctionnement en ajoutant un deuxième bit de retenue entrante (C2) à l'addition effectuée sur les deux nombres (A32 A31...A17, B32 B31...B17) constitués chacun par les bits d'un des opérandes à N bits dont le rang est supérieur à celui de la cellule de sélection (116), on affecte des valeurs égales à celle de ce deuxième bit de retenue entrante (C2) aux deux bits (A16, B16) des opérandes à N bits ayant le même rang que la cellule de sélection (116).

7. Procédé conforme à l'une des revendications 1 à 6, caractérisé en ce que, pour que l'opérateur (10) effectue des soustractions, on commande au moins chacune des cellules (100 à 115; 117 à 132) du circuit de préconditionnement (11) autres que la cellule de sélection (116) de façon que sa première combinaison logique (p0 à p15; p17 à p32) soit obtenue par une opération logique OU exclusif entre le bit de rang correspondant (A0 à A15; A17 à A32) d'un premier opérande à N bits et l'inverse du bit de rang correspondant (B0 à B15; B17 à B32) du deuxième opérande à N bits et que sa deuxième combinaison logique (g0 à g15; g17 à g32) soit obtenue par une opération logique ET entre le bit de rang correspondant (A0 à A15; A17 à A32) du premier opérande à N bits et l'inverse du bit de rang correspondant (B0 à B15; B17 à B32) du deuxième opérande à N bits, on sélectionne le premier mode de fonctionnement de l'opérateur (10) en commandant la cellule de sélection (116) de façon que sa première combinaison logique (p16) soit égale à 1 et que sa deuxième combinaison logique (g16) soit égale à 0 et en forçant le bit de retenue entrante (Cin) à 1, et on sélectionne le deuxième mode de fonctionnement de l'opérateur (10) en commandant la cellule de sélection (116) de façon que sa première combinaison logique (p16) soit égale à 0 et que sa deuxième combinaison logique (g16) soit égale à 1, le bit de retenue entrante (Cin) restant forcé à 1.

8. Procédé conforme à la revendication 7, caractérisé en ce que, pour que l'opérateur (10) effectue des soustractions, on commande en outre la cellule de sélection (116) de façon que sa première combinaison logique (p16) soit obtenue par une opération logique OU exclusif entre le bit de rang correspondant (A16) du premier opérande à N bits et l'inverse du bit de rang correspondant (B16) du deuxième opérande à N bits et que sa deuxième combinaison logique (g16) soit obtenue par une opération logique ET entre le bit de rang correspondant (A16) du premier opérande à N bits et l'inverse du bit de rang correspondant (B16) du deuxième opérande à N bits, on sélectionne le premier mode de fonctionnement de l'opérateur (10) en affectant des valeurs identiques aux deux bits (A16, B16) des opérandes à N bits ayant le même rang que la cellule de sélection (116), et on sélectionne le deuxième mode de fonctionnement de l'opérateur (10) en affectant respectivement les valeurs 1 et 0 aux deux bits (A16, B16) des opérandes à N bits ayant le même rang que la cellule de sélection (116).

9. Procédé conforme à l'une des revendications 1 à 8, caractérisé en ce que, pour que l'opérateur (10) effectue, dans son deuxième mode de fonctionnement, une addition entre les deux nombres (A15 A14...A0, B15 B14...B0) constitués chacun par les bits d'un des opérandes à N bits dont le rang est inférieur à celui de la cellule de sélection (116) et une soustraction entre les deux nombres (A32 A31...A17, B32 B31...B17) constitués chacun par les bits d'un des opérandes à N bits dont le rang est supérieur à celui de la cellule de sélection (116), on commande chacune des cellules (100 à 115) du circuit de préconditionnement (11) dont le rang est inférieur à celui de la cellule de sélection (116) de façon que sa première combinaison logique (p0 à p15) soit obtenue par une opération logique OU exclusif entre les deux bits de rang correspondant (A0, B0 à A15, B15) des deux opérandes à N bits et que sa deuxième combinaison logique (g0 à g15) soit obtenue par une opération logique ET entre les deux bits de rang correspondant (A0, B0 à A15, B15) des deux opérandes à N bits, on commande chacune des cellules (117 à 132) du circuit de préconditionnement (11) dont le rang est supérieur à celui de la cellule de sélection (116) de façon que sa première combinaison logique (p17 à p32) soit obtenue par une opération logique OU exclusif entre le bit de rang correspondant (A17 à A32) d'un premier opérande à N bit et l'inverse du bit de rang correspondant (B17 à B32) du deuxième opérande à N bits et que sa deuxième combinaison logique (g17 à g32) soit obtenue par une opération logique ET entre le bit de rang correspondant (A17 à A32) du premier opérande à N bits et l'inverse du bit de rang correspondant (B17 à B32) du deuxième opérande à N bits, et on commande la cellule de sélection (116) de façon que sa première combinaison logique (p16) soit égale à zéro et que sa deuxième combinaison logique (g16) soit égale à 1.

10. Procédé conforme à l'une des revendications 1 à 9, caractérisé en ce que pour que l'opérateur (10) effectue, dans son deuxième mode de fonctionnement, une soustraction entre les deux nombres (A15 A14...A0, B15 B14...B0) constitués chacun par les bits d'un des opérandes à N bits dont le rang est inférieur à celui de la cellule de sélection (116) et une addition entre les deux nombres (A32 A31...A17, B32 B31...B17) constitués chacun par les bits d'un des opérandes à N bits dont le rang est supérieur à celui de la cellule de sélection (116), on commande chacune des cellules (100 à 115) du circuit de préconditionnement (11) dont le rang est inférieur à celui de la cellule de sélection (116) de façon que sa première combinaison logique (p0 à p15) soit obtenue par une opération logique OU exclusif entre le bit de rang correspondant (A0 à A15) d'un premier opérande à N bits et l'inverse du bit de rang correspondant (B0 à B15) du deuxième opérande à N bits et que sa deuxième combinaison logique (g0 à g15) soit obtenue par une opération logique ET entre le bit de rang correspondant (A0 à A15) du premier opérande à N bits et l'inverse du bit de rang correspondant (B0 à B15) du deuxième opérande à N bits, on commande chacune des cellules (117 à 132) du circuit de préconditionnement (11) dont le rang est supérieur à celui de la cellule de sélection (116) de façon que sa première combinaison logique (p17 à p32) soit obtenue par une opération logique OU exclusif entre les deux bits de rang correspondant (A17, B17 à A32, B32) des deux opérandes à N bits et que sa deuxième combinaison logique (g17 à g32) soit obtenue par une opération logique ET entre les deux bits de rang correspondant (A17, B17 à A32, B32) des opérandes à N bits, et on commande la cellule de sélection (116) de façon que ses combinaisons logiques (p16, g16) soient égales à 0.

11. Procédé conforme à l'une des revendications 1 à 10, caractérisé en ce que, pour que l'opérateur (10) effectue des opérations logiques entre les bits individuels d'un premier opérande à N bits et les bits individuels du deuxième opérande à N bits, on commande les cellules (100 à 132) du circuit de préconditionnement (11) de façon que leurs deuxièmes combinaisons logiques (g0 à g32) soient toutes égales à une valeur prédéterminée qu'on affecte aussi au bit de retenue entrante (Cin), les bits de retenue (C0 à C32) produits par le générateur de retenues (12) ayant alors tous également cette valeur prédéterminée.

12. Unité arithmétique, comprenant un opérateur (10) adapté pour recevoir deux opérandes à N bits (A32 A31...A0, B32 B31...B0) et produire un résultat à N bits (S32 S31...S0), l'opérateur (10) comportant un circuit de préconditionnement (11), un générateur de retenues (12) et un circuit de sommation (13) montés en cascade, dans laquelle le circuit de préconditionnement (11) comprend N cellules (100 à 132) montées en parallèle, chacune de ces N cellules recevant deux bits de même rang (A0,B0 à A32, B32) des deux opérandes à N bits et produisant des première et deuxième combinaisons logiques (p0,g0 à p32, g32) de ces deux bits de même rang déterminées par des signaux de commande (NP0 à NP3, NG0 à NG3), dans laquelle le générateur de retenues (12) reçoit les combinaisons logiques issues du circuit de préconditionnement et un bit de retenue entrante (Cin) et calcule N bits de retenue (C0 à C32), et dans laquelle le circuit de sommation (13) comprend N additionneurs élémentaires (200 à 232) montés en parallèle, chacun de ces N additionneurs élémentaires recevant une des premières combinaisons logiques (p0 à p32) issue d'une cellule correspondante du circuit de préconditionnement et un des bits de retenue (Cin, C0 à C31) issu du générateur de retenues et produisant l'un des bits (S0 à S32) du résultat à N bits en effectuant une opération logique OU exclusif entre cette première combinaison logique (p0 à p32) et ce bit de retenue (Cin, C0 à C31),

caractérisée en ce que, n et m désignant des nombres entiers tels que n + 1 + m = N, les n premiers bits (A0 à A15, B0 à B15) des deux opérandes à N bits sont fournis aux cellules correspondantes (100 à 115) du circuit de préconditionnement (11) par l'intermédiaire de deux registres d'entrée à n bits (1, 2), les m derniers bits (A17 à A32, B17 à B32) des deux opérandes à N bits sont fournis aux cellules correspondantes (117 à 132) du circuit de préconditionnement (11) par l'intermédiaire de deux registres d'entrée à m bits (3, 4), les n premiers bits (S0 à S15) du résultat à N bits sont adressés à un registre de sortie à n bits (5) par les additionneurs élémentaires correspondants (200 à 215) du circuit de sommation (13), et les m derniers bits (S17 à S32) du résultat à N bits sont adressés à un registre de sortie à m bits (6) par les additionneurs élémentaires correspondants (217 à 232) du circuit de sommation (13), et en ce que la (n+1)-ième cellule du circuit de préconditionnement (11) est une cellule de sélection (116) pour commander sélectivement deux modes de fonctionnement de l'opérateur (10), à savoir un premier mode de fonctionnement dans lequel le nombre à n + m = N-1 bits (S32 S31...S17 S15 S14...S0) constitué par la réunion des bits des deux registres de sortie (5, 6) est le résultat d'une opération effectuée sur les deux nombres à n + m = N-1 bits (A32 A31...A17 A15 A14...A0, B32 B31...B17 B15 B14...B0) constitués chacun par la réunion des bits d'un registre d'entrée à n bits (1, 2) et des bits d'un registre d'entrée à m bits (3, 4), et un deuxième mode de fonctionnement dans lequel les deux nombres (S15 S14...S0, S32 S31...S17) constitués respectivement par les bits du registre de sortie à n bits (5) et par les bits du registre de sortie à m bits (6) sont les résultats de deux opérations effectuées en parallèle respectivement sur les deux nombres (A15 A14...A0, B15 B14...B0) constitués chacun par les bits d'un des deux registres d'entrée à n bits (1, 2) et sur les deux nombres (A32 A31...A17, B32 B31...B17) constitués chacun par les bits d'un des deux registres d'entrée à m bits (3, 4).

13. Unité arithmétique conforme à la revendication 12, caractérisée en ce que N est impair et n = m = (N - 1)/2.

14. Unité arithmétique conforme à la revendication 13, dans laquelle N = 33.

**Patentansprüche**

1. Verfahren zum Ausführen numerischer Berechnungen mittels eines zum Empfangen zweier Operanden mit N Bits (A32 A31 ... A0, B32 B31 ...B0) und zum Erzeugen eines Ergebnisses mit N Bits (S32 S31 ... S0) geeigneten Operators (10), wobei der Operator (10) eine Vorbehandlungsschaltung (11), einen Übertragsgenerator (12) und eine Summierschaltung (13) umfaßt, die in Kaskadenschaltung angeordnet sind, wobei die Vorbehandlungsschaltung (11) N parallel angeordnete Zellen (100 bis 132) umfaßt, wobei jede dieser N Zellen zwei Bits gleicher Wertigkeit (A0, B0 bis A32, B32) der N-bittigen Operanden empfängt und erste und zweite logische Kombinationen (p0, g0 bis p32, g32) dieser beiden Bits gleicher Wertigkeit erzeugt, die durch Steuersignale (NP0 bis NP3, NG0 bis NG3) festgelegt sind, wobei der Übertragsgenerator (12) die durch die Vorbehandlungsschaltung ausgegebenen logischen Kombinationen sowie ein Eingangs-Übertragsbit (Cin) empfängt und N Übertragsbits (C0 bis C32) berechnet, und wobei die Summierschaltung (13) N parallel angeordnete Elementar-Addierer (200 bis 232) umfaßt, wobei jeder dieser N Elementar-Addierer eine der ersten durch eine entsprechende Zelle der Vorbehandlungsschaltung ausgegebenen logischen Kombinationen (p0 bis p32) und eines der durch den Übertragsgenerator ausgegebenen Übertragsbits (Cin, C0 bis C32) empfängt und das eine der Bits (SO bis S32) des N-bittigen Ergebnisses durch Ausführen einer logischen Exklusiv- ODER-Verknüpfung zwischen dieser ersten logischen Kombination (p0 bis p32) und diesem Übertragsbit (Cin, C0 bis C31) erzeugt,

dadurch gekennzeichnet, daß man eine der N Zellen der Vorbehandlungsschaltung (11) als Auswahlzelle (116) zum selektiven Steuern zweier Betriebsarten des Operators (10) verwendet, und zwar einer ersten Betriebsart, in der die Anzahl von N-1 Bits (S32 S31 ... S17 S15 S14 ... S0), die sich aus den Bits des N-bittigen Ergebnisses mit Ausnahme des Bits (S16) zusammensetzen, dessen Wertigkeit der der Auswahlzelle 16) entspricht, das Ergebnis einer über die beiden Anzahlen von N-1 Bits (A32 A31 ... A17 A15 A14 ... A0, B32 B31 ... B17 B15 B14 ... B0), deren jede sich aus den Bits eines der N-bittigen Operanden mit Ausnahme des Bits (A16, B16), dessen Wertigkeit der der Auswahlzelle (116) entspricht, ausgeführten Operation ist, und einer zweiten Betriebsart, in der die beiden Anzahlen (S15 S14 ... S0, S32 S31 ... S17), die sich jeweils aus den Bits des N-bittigen Ergebnisses, deren Wertigkeit kleiner ist als die der Auswahlzelle (116), und den Bits des N-bittigen Ergebnisses, deren Wertigkeit größer ist als die der Auswahlzelle (116), zusammensetzen, die Ergebnisse zweier parallel jeweils über die beiden Anzahlen (A15 A14 ... A0, B15 B14 ... B0), deren jede sich aus den Bits eines der N-bittigen Operanden zusammensetzt, deren Wertigkeit kleiner ist als die der Auswahlzelle (116), und über die beiden Anzahlen (A32 A31 ... A17, B32 B31 ... B 17), deren jede sich aus den Bits eines der N-bittigen Operanden zusammensetzt, deren Wertigkeit größer ist als die der Auswahlzelle (116), ausgeführten Operationen sind.

2. Verfahren nach Anspruch 1, dadurch gekennzeichnet, daß N ungerade ist, und daß die Auswahlzelle (116) diejenige Zelle der Vorbehandlungsschaltung (11) mit der Wertigkeit (N-1)/2 ist.

3. Verfahren nach Anspruch 2, bei dem N gleich 33 ist.

4. Verfahren nach einem der Ansprüche 1 bis 3, dadurch gekennzeichnet, daß man, damit der Operator (10) Additionen ausführt, zumindest jede der von der Auswahlzelle (116) verschiedenen Zellen (100 bis 115; 117 bis 132) der Vorbehandlungsschaltung (11) derart steuert, daß ihre erste logische Kombination (p0 bis p15; p17 bis p32) durch eine logische Exklusiv-ODER-Verknüpfung zwischen den beiden Bits entsprechender Wertigkeit (A0, B0 bis A15, B15; A17, B17 bis A32, B32) der beiden N-bittigen Operanden erhalten wird, und daß ihre zweite logische Kombination (g0 bis g15; g17 bis g32) durch eine logische UND-Verknüpfung zwischen den beiden Bits entsprechender Wertigkeit (A0, B0 bis A15, B15; A17, B17 bis A32, B32) der beiden N-bittigen Operanden erhalten wird, man die erste Betriebsart des Operators (10) auswählt durch Steuern der Auswahlzelle (116) derart, daß ihre erste logische Kombination (p16) gleich 1 wird und daß ihre zweite logische Kombination (g16) gleich 0 wird, und man die zweite Betriebsart des Operators (10) auswählt durch Steuern der Auswahlzelle (116) derart, daß ihre logischen Kombinationen (p16, g16) gleich 0 werden.

5. Verfahren nach Anspruch 4, dadurch gekennzeichnet, daß man, damit der Operator (10) Additionen ausführt, die Auswahlzelle (116) darüber hinaus derart steuert, daß ihre erste logische Kombination (p16) durch eine logische Exklusiv-ODER- Verknüpfung zwischen den beiden Bits entsprechender Wertigkeit (A16, B16) der beiden N-bittigen Operanden erhalten wird und daß ihre zweite logische Kombination (g16) durch eine logische UND-Verknüpfung zwischen den beiden Bits entsprechender Wertigkeit (A16, B16) der beiden N-bittigen Operanden erhalten wird, man die erste Betriebsart des Operators (10) auswählt, indem man den beiden Bits (A16, B16) der N-bittigen Operanden, die dieselbe Wertigkeit wie die Auswahlzelle (116) haben, gegenseitig inverse Werte zuweist, und man die zweite Betriebsart des Operators (10) auswählt, indem man den beiden Bits (A16, B 16) der N-bittigen Operanden, die dieselbe Wertigkeit wie die Auswahlzelle (116) haben, Nullwerte zuweist.

6. Verfahren nach Anspruch 5, dadurch gekennzeichnet, daß man, damit der Operator (10) Additionen in seiner zweiten Betriebsart ausführt, indem er der Addition, die über die beiden Anzahlen (A32 A31 ... A17, B32 B31 ... B17) ausgeführt wurde, deren jede sich aus den Bits eines der N-bittigen Operanden zusammensetzt, deren Wertigkeit größer ist als die der Auswahlzelle (116), ein zweites Eingangs-Übertragsbit (C2) anfügt, den beiden Bits (A16, B16) der N-bittigen Operanden, die dieselbe Wertigkeit wie die Auswahlzelle (116) haben, Werte zuweist, die gleich dem dieses zweiten Eingangs-Übertragsbits (C2) sind.

7. Verfahren nach einem der Ansprüche 1 bis 6, dadurch gekennzeichnet, daß man, damit der Operator (10) Subtraktionen ausführt, zumindest jede der von der Auswahlzelle (116) verschiedenen Zellen (100 bis 115; 117 bis 132) der Vorbehandlungsschaltung (11) derart steuert, daß ihre erste logische Kombination (p0 bis p15; p17 bis p32) durch eine logische Exklusiv-ODER-Verknüpfung zwischen dem Bit entsprechender Wertigkeit (A0 bis A15, A17 bis A32) eines ersten N-bittigen Operanden und dem Inversen des Bits entsprechender Wertigkeit (B0 bis B 15; B 17 bis B32) des zweiten N-bittigen Operanden erhalten wird und daß ihre zweite logische Kombination (g0 bis g15; g17 bis g32) durch eine logische UND-Verknüpfung zwischen dem Bit entsprechender Wertigkeit (A0 bis A15; A17 bis A32) des ersten N-bittigen Operanden und dem Inversen des Bits entsprechender Wertigkeit (B0 bis B 15; B 17 bis B32) des zweiten N-bittigen Operanden erhalten wird, man die erste Betriebsart des Operators (10) auswählt durch Steuern der Auswahlzelle (116) derart, daß ihre erste logische Kombination (p16) gleich 1 wird und daß ihre zweite logische Kombination (g16) gleich 0 wird, sowie durch Festlegen des Eingangs-Übertragsbits (Cin) auf 1, und man die zweite Betriebsart des Operators (10) auswählt durch Steuern der Auswahlzelle (116) derart, daß ihre erste logische Kombinationen (p 16) gleich 0 wird und daß ihre zweite logische Kombination (g16) gleich 1 wird, wobei das Eingangs-Übertragsbit (Cin) auf 1 festgelegt bleibt.

8. Verfahren nach Anspruch 7, dadurch gekennzeichnet, daß man, damit der Operator (10) Subtraktionen ausführt, die Auswahlzelle (116) darüber hinaus derart steuert, daß ihre erste logische Kombination (p16) durch eine logische Exklusiv-ODER Verknüpfung zwischen dem Bit entsprechender Wertigkeit (A16) des ersten N-bittigen Operanden und dem Inversen des Bits entsprechender Wertigkeit (B16) des zweiten N-bittigen Operanden erhalten wird, und daß ihre zweite logische Kombination (g16) durch eine logische UND-Verknüpfung zwischen dem Bit entsprechender Wertigkeit (A16) des ersten N-bittigen Operanden und dem Inversen des Bits entsprechender Wertigkeit (B 16) des zweiten N-bittigen Operanden erhalten wird, man die erste Betriebsart der Operators (10) auswählt, indem man den beiden Bits (A16, B16) der N-bittigen Operanden, die dieselbe Wertigkeit wie die Auswahlzelle (116) haben, identische Werte zuweist, und man die zweite Betriebsart des Operators (10) auswählt, indem man den beiden Bits (A16, B16) der N-bittigen Operanden, die dieselbe Wertigkeit wie die Auswahlzelle (116) haben, die Werte 1 bzw. 0 zuweist.

9. Verfahren nach einem der Ansprüche 1 bis 8, dadurch gekennzeichnet, daß man, damit der Operator (10) in seiner zweiten Betriebsart eine Addition zwischen den beiden Anzahlen (A15 A14 ... A0, B15 B14 ... B0), deren jede sich aus den Bits eines der N-bittigen Operanden zusammensetzt, deren Wertigkeit kleiner ist als die der Auswahlzelle (116), und eine Subtraktion zwischen den beiden Anzahlen (A32 A31 ... A17, B32 B31 ... B 17), deren jede sich aus den Bits eines der N-bittigen Operanden zusammensetzt, deren Wertigkeit größer ist als die der Auswahlzelle (116), ausführt, jede der Zellen (100 bis 115) der Vorbehandlungsschaltung, deren Wertigkeit kleiner ist als die der Auswahlzelle (116), derart steuert, daß ihre erste logische Kombination (p0 bis p15) durch eine logische Exklusiv-ODER-Verknüpfung zwischen den beiden Bits entsprechender Wertigkeit (A0, B0 bis A15, B 15) der beiden N-bittigen Operanden erhalten wird und daß ihre zweite logische Kombination (g0 bis g15) durch eine logische UND-Verknüpfung zwischen den beiden Bits entsprechender Wertigkeit (A0, B0 bis A15, B15) der beiden N-bittigen Operanden erhalten wird, man jede der Zellen (117 bis 132) der Vorbehandlungsschaltung (11), deren Wertigkeit größer ist als die der Auswahlzelle (116), derart steuert, daß ihre erste logische Kombination (p17 bis p32) durch eine logische Exklusiv-ODER-Verknüpfung zwischen dem Bit entsprechender Wertigkeit (A17 bis A32) eines ersten N-bittigen Operanden und dem Inversen des Bits entsprechender Wertigkeit (B17 bis B32) des zweiten N-bittigen Operanden erhalten wird und daß ihre zweite logische Kombination (g17 bis g32) durch eine logische UND-Verknüpfung zwischen dem Bit entsprechender Wertigkeit (A17 bis A32) des ersten N-bittigen Operanden und dem Inversen des Bits entsprechender Wertigkeit (B17 bis B32) des zweiten N-bittigen Operanden, und man die Auswahlzelle (116) derart steuert, daß ihre erste logische Kombination (p16) gleich null wird und daß ihre zweite logische Kombination (g16) gleich 1 wird.

10. Verfahren nach einem der Ansprüche 1 bis 9, dadurch gekennzeichnet, daß man, damit der Operator(10) in seiner zweiten Betriebsart eine Subtraktion zwischen den beiden Anzahlen (A15 A14 ... A0, B15 B14 ... B0), deren jede sich aus den Bits eines der N-bittigen Operanden zusammensetzt, deren Wertigkeit kleiner ist als die der Auswahlzelle (116), und eine Addition zwischen den beiden Anzahlen (A32 A31 ... A17, B32 B31 ... B 17), deren jede sich aus den Bits eines der N-bittigen Operanden zusammensetzt, deren Wertigkeit größer ist als die der Auswahlzelle (116), ausführt, jede der Zellen (100 bis 115) der Vorbehandlungsschaltung (11), deren Wertigkeit kleiner ist als die der Auswahlzelle (116), derart steuert, daß ihre erste logische Kombination (p0 bis p15) durch eine logische Exklusiv-ODER-Verknüpfung zwischen dem Bit entsprechender Wertigkeit (A0 bis A15) eines ersten N-bittigen Operanden und dem Inversen des Bits entsprechender Wertigkeit (B0 bis B 15) des zweiten N-bittigen Operanden erhalten wird und daß ihre zweite logische Kombination (g0 bis g15) durch eine logische UND-Verknüpfung zwischen dem Bit entsprechender Wertigkeit (A0 bis A15) des ersten N-bittigen Operanden und dem Inversen des Bits entsprechender Wertigkeit (B0 bis B15) des zweiten N-bittigen Operanden erhalten wird, man jede der Zellen (117 bis 132) der Vorbehandlungsschaltung, deren Wertigkeit größer ist als die der Auswahlzelle (116), derart steuert, daß ihre erste logische Kombination (p17 bis p32) durch eine logische Exklusiv-ODER-Verknüpfung zwischen den beiden Bits entsprechender Wertigkeit (A17, B17 bis A32, B32) der beiden N-bittigen Operanden erhalten wird und daß ihre zweite logische Kombination (g17 bis g32) durch eine logische UND-Verknüpfung zwischen den beiden Bits entsprechender Wertigkeit (A17, B 17 bis A32, B32) der N-bittigen Operanden erhalten wird, und man die Auswahlzelle (116) derart steuert, daß ihre logischen Kombinationen (p16, g16) gleich 0 werden.

11. Verfahren nach einem der Ansprüche 1 bis 10, dadurch gekennzeichnet, daß man, damit der Operator (10) logische Operationen zwischen den einzelnen Bits eines ersten N-bittigen Operanden und den einzelnen Bits des zweiten N-bittigen Operanden ausführt, die Zellen (100 bis 132) der Vorbehandlungsschaltung (11) derart steuert, daß ihre zweiten logischen Kombinationen (g0 bis g32) alle gleich einem vorbestimmten Wert werden, den man auch dem Eingangs-Übertragsbit (Cin) zuweist, wodurch die durch den Übertragsgenerator (12) erzeugten Ubertragsbits(C0 bis C32) dann alle gleichfalls diesen vorbestimmten Wert haben.

12. Arithmetische Einheit, mit einem zum Empfangen zweier Operanden mit N Bits (A32 A31 ... A0, B32 B31 ... B0) und zum Erzeugen eines Ergebnisses mit N Bits (S32 S31... S0) geeigneten Operator (10), wobei der Operator (10) eine Vorbehandlungsschaltung (11), einen Übertragsgenerator (12) und eine Summierschaltung (13) umfaßt, die in Kaskadenschaltung angeordnet sind, wobei die Vorbehandlungsschaltung (11) N parallel angeordnete Zellen (100 bis 132) umfaßt, wobei jede der N Zellen zwei Bits gleicher Wertigkeit (A0, B0 bis A32, B32) der beiden N-bittigen Operanden empfängt und erste und zweite logische Kombinationen (p0, g0 bis p32, g32) dieser beiden Bits gleicher Wertigkeit erzeugt, die durch Steuersignale (NP0 bis NP3, NG0 bis NG3) festgelegt sind, wobei der Übertragsgenerator (12) die durch die Vorbehandlungsschaltung (11) ausgegebenen logischen Kombinationen und ein Eingangs-Übertragsbit (Cin) empfängt und N Übertragsbits (C0 bis C32) berechnet, und wobei die Summierschaltung (13) N parallel angeordnete Elementar-Addierer (200 bis 232) umfaßt, wobei jeder dieser N Elementar-Addierer eine der ersten logischen Kombinationen (p0 bis p32), die durch eine entsprechende Zelle der Vorbehandlungsschaltung ausgegeben wird, und eines der Übertragsbits (Cin, C0 bis C31), das durch den Übertragsgenerator ausgegeben wird, empfängt und eines der Bits (S0 bis S32) des N-bittigen Ergebnisses durch Ausführen einer logischen Exklusiv-ODER-Verknüpfung zwischen dieser ersten logischen Kombination (p0 bis p32) und diesem Übertragsbit (Cin, C0 bis C31) erzeugt,

dadurch gekennzeichnet, daß dann, wenn n und m ganze Zahlen bezeichnen und zum Beispiel n + 1 + m = N ist, die n ersten Bits (A0 bis A15, B0 bis B15) der beiden N-bittigen Operanden über zwei Eingangsregister (1, 2) mit n Bits den entsprechenden Zellen (100 bis 115) der Vorbehandlungsschaltung (11) zugeführt werden, die m letzten Bits (A17 bis A32, B17 bis B32) der beiden N-bittigen Operanden über zwei Eingangsregister (3, 4) mit m Bits den entsprechenden Zellen (117 bis 132) der Vorbehandlungsschaltung (11) zugeführt werden, die n ersten Bits (S0 bis S15) des N-bittigen Ergebnisses durch die entsprechenden Elementar-Addierer (200 bis 215) der Summierschaltung (13) an ein Ausgangsregister (5) mit n Bits übermittelt werden, und die m letzten Bits (S17 bis S32) des N-bittigen Ergebnisses durch die entsprechenden Elementar-Addierer (217 bis 232) der Summierschaltung (13) an ein Ausgangsregister (6) mit m Bits übermittelt werden, und dadurch, daß die (n+1)-te Zelle der Vorbehandlungsschaltung (11) eine Auswahlzelle (116) ist zum selektiven Steuern zweier Betriebsarten des Operators (10), und zwar einer ersten Betriebsart, in der die Anzahl von n + m = N - 1 Bits (S32 S31 ... S17 S15 S14 ... S0), die durch die Vereinigung der Bits der beiden Ausgangsregister (5, 6) gebildet wird das Ergebnis einer Verknüpfung ist, die über die beiden Anzahlen von n + m = N - 1 Bits (A 32 A31 ... A17 A15 A14 ... A0, B32 B31 ... B17 B15 B14 ... B0), deren jede durch die Vereinigung der Bits eines n-bittigen Eingangsregisters (1, 2) und der Bits eines m-bittigen Eingangsregisters (3, 4) gebildet wird, ausgeführt wird, und einer zweiten Betriebsart, in der die beiden Anzahlen (S15 S14 ... S0, S32 S31 ... S17), die sich aus den Bits des n-bittigen Ausgangsregisters (5) bzw. den Bits des m-bittigen Ausgangsregisters (6) zusammensetzen, die Ergebnisse zweier parallel über die beiden Anzahlen (A15 A4 ... A0, B15 B14 ... B0), deren jede sich aus den Bits eines der beiden n-bittigen Eingangsregister (1, 2) zusammensetzt, bzw. über die beiden Anzahlen (A32 A31 ... A17, B32 B31 ... B17), deren jede sich aus den Bits eines der beiden m-bittigen Eingangsregister (3, 4) zusammensetzt, ausgeführten Verknüpfungen sind.

13. Arithmetische Einheit nach Anspruch 12, dadurch gekennzeichnet, daß N ungerade ist, und daß n = m = (N - 1)/2 ist.

14. Arithmetische Einheit nach Anspruch 13, bei der N = 33 ist.

## Claims

1. Method for making numerical calculations by means of an operator (10) suitable for receiving two N-bit operands (A32 A31...A0, B32 B31...B0) and producing an N-bit result (S32 S31...S0), the operator (10) including a preconditioning circuit (11), a carry-over generator (12) and an summing circuit (13) mounted is cascade, in which the preconditioning circuit (11) comprises N cells (100 to 132) mounted in parallel, each of these N cells receiving two bits of the same rank (A0, B0 to A32, B32) from the two N-bit operands and producing first and second logic combinations (p0, g0 to p32, g32) of these two bits of the same rank determined by control signals (NP0 to NP3, NG0 to NG3), in which the carry-over generator (12) receives the logic combinations coming from the preconditioning circuit and an incoming carry-over bit (Cin) and calculates N carry-over bits (C0 to C32), and in which the summing circuit (13) comprises N constituent adders (200 to 232) mounted in parallel, each of these N constituent adders receiving one of the first logic combinations (p0 to p32) coming from a corresponding cell in the preconditioning circuit and one of the carry-over bits (Cin, C0 to C31) coming from the carry-over generator and producing one of the bits (S0 to S32) of the N-bit result by performing an exclusive OR logic operation between this first logic combination (p0 to p32) and this carry-over bit (Cin, C0 to C31),
characterised in that one of the N cells of the preconditioning circuit (11) is used as a selection cell (116) for selectively controlling two modes of functioning of the operator (10), namely a first mode of functioning in which the N-1 bit number (S32 S31...S17 S15 S14...S0) formed by the bits of the N-bit result except for the bit (S16) whose rank corresponds to that of the selection cell (116) is the result of an operation performed on the two N-1 bit numbers (A32 A31...A17 A15 A14...A0, B32 B31...B17 B15 B14...B0) each formed by the bits of one of the N-bit operands except for the bit (A16, B16) whose rank corresponds to that of the selection cell (116), and a second mode of functioning in which the two numbers (S15 S14...S0, S32 S31...S17) formed respectively by the bits of the N-bit result whose rank is lower than that of the selection cell (116) and by the bits of the N-bit result whose rank is higher than that of the selection cell (116) are the results of two operations performed in parallel respectively on the two numbers (A15 A14...A0, B15 B14...B0) each formed by the bits of one of the N-bit operands whose rank is lower than that of the selection cell (116) and on the two numbers (A32 A31...A17, B32 B31...B17) each formed by the bits of one of the N-bit operands whose rank is higher than that of the selection cell (116).

2. Method according to Claim 1, characterised in that N is odd and the selection cell (116) is the cell of rank (N-1)/2 of the preconditioning circuit (11).

3. Method according to Claim 2, in which N = 33.

4. Method according to one of Claims 1 to 3, characterised in that, for the operator (10) to perform additions, at least each of the cells (100 to 115; 117 to 132) of the preconditioning circuit (11) other than the selection cell (116) is controlled so that its first logic combination (p0 to p15; p17 to p32) is obtained by an exclusive OR logic operation between the two bits of corresponding rank (A0, B0 to A15, B15; A17, B17 to A32, B32) of the two N-bit operands and so that its second logic combination (g0 to g15; g17 to g32) is obtained by an AND logic operation between the two bits of corresponding rank (A0, B0 to A15, B15; A17, B17 to A32, B32) of the two N-bit operands, the first mode of functioning of the operator (10) is selected by controlling the selection cell (116) so that its first logic combination (p16) is equal to 1 and its second logic combination (g16) is equal to 0, and the second mode of functioning of the operator (10) is selected by controlling the selection cell (116) so that its logic combinations (p16, g16) are equal to 0.

5. Method according to Claim 4, characterised in that, for the operator (10) to perform additions, the selection cell (116) is also controlled so that its first logic combination (p16) is obtained by an exclusive OR logic operation between the two bits of corresponding rank (A16, B16) of the two N-bit operands and so that its second logic combination (g16) is obtained by an AND logic operation between the two bits of corresponding rank (A16, B16) of the two N-bit operands, the first mode of functioning of the operator (10) is selected by allocating values which are the inverse of each other to the two bits (A16, B16) of the N-bit operands having the same rank as the selection cell (116), and the second mode of functioning of the operator (10) is selected by allocating nil values to the two bits (A16, B16) of the N-bit operands having the same rank as the selection cell (116).

6. Method according to Claim 5, characterised in that, for the operator (10) to perform additions in its second mode of functioning by adding a second incoming carry-over bit (C2) to the addition performed on the two numbers (A32 A31...A17, B32 B31...B17) each formed by the bits of one of the N-bit operands whose rank is higher than that of the selection cell (116), values equal to that of this second incoming carry-over bit (C2) are allocated to the two bits (A16, B16) of the N-bit operands having the same rank as the selection cell (116).

7. Method according to one of Claims 1 to 6, characterised in that, for the operator (10) to perform subtractions, at least each of the cells (100 to 115; 117 to 132) of the preconditioning circuit (11) other than the selection cell (116) are controlled so that its first logic combination (p0 to p15; p17 to p32) is obtained by an exclusive OR logic operation between the bit of corresponding rank (A0 to A15, A17 to A32) of a first N-bit operand and the inverse of the bit of corresponding rank (B0 to B15; B17 to B32) of the second N-bit operand and so that its second logic combination (g0 to g15; g17 to g32) is obtained by an AND logic operation between the bit of corresponding rank (A0 to A15, A17 to A32) of the first N-bit operand and the inverse of the bit of corresponding rank (B0 to B15; B17 to B32) of the second N-bit operand, the first mode of functioning of the operator (10) is selected by controlling the selection cell (116) so that its first logic combination (p16) is equal to 1 and its second logic combination (g16) is equal to 0 and by forcing the incoming carry-over bit (Cin) to 1, and the second mode of functioning of the operator (10) is selected by controlling the selection cell (116) so that its first logic combination (p16) is equal to 0 and its second logic combination (g16) is equal to 1, the incoming carry-over bit (Cin) remaining forced to 1.

8. Method according to Claim 7, characterised in that, for the operator (10) to perform subtractions, the selection cell (116) is also controlled so that its first logic combination (p16) is obtained by an exclusive OR logic operation between the bit of corresponding rank (A16) of the first N-bit operand and the inverse of the bit of corresponding rank (B16) of the second N-bit operand and so that its second logic combination (g16) is obtained by an AND logic operation between the bit of corresponding rank (A16) of the first N-bit operand and the inverse of the bit of corresponding rank (B16) of the second N-bit operand, the first mode of functioning of the operator (10) is selected by allocating identical values to the two bits (A16, B16) of the N-bit operands having the same rank as the selection cell (116), and the second mode of functioning of the operator (10) is selected by allocating respectively the values 1 and 0 to the two bits (A16, B16) of the N-bit operands having the same rank as the selection cell (116).

9. Method according to one of Claims 1 to 8, characterised in that, for the operator (10) to perform, in its second mode of functioning, an addition between the two numbers (A15 A14...A0, B15 B14...B0) each formed by the bits of one of the N-bit operands whose rank is lower than that of the selection cell (116) and a subtraction between the two numbers (A32 A31...A17, B32 B31...B17) each formed by the bits of one of the N-bit operands whose rank is higher than that of the selection cell (116), each of the cells (100 to 115) of the preconditioning circuit (11) whose rank is lower than that of the selection cell (116) is controlled so that its first logic combination (p0 to p15) is obtained by an exclusive OR logic operation between the two bits of corresponding rank (A0, B0 to A15, B15) of the two N-bit operands and so that its second logic combination (g0 to g15) is obtained by an AND logic operation between the two bits of corresponding rank (A0, B0 to A15, B15) of the two N-bit operands, each of the cells (117 to 132) of the preconditioning circuit (11) whose rank is higher than that of the selection cell (116) is controlled so that its first logic combination (B17 to B32) is obtained by an exclusive OR logic operation between the bit of corresponding rank (A17 to A32) of a first N-bit operand and the inverse of the bit of corresponding rank (B17 to B32) of the second N-bit operand and so that its second logic combination (g17 to g32) is obtained by an AND logic operation between the bit of corresponding rank (A17 to A32) of the first N-bit operand and the inverse of the bit of corresponding rank (B17 to B32) of the second N-bit operand, and the selection cell (116) is controlled so that its first logic combination (p16) is equal to 0 and its second logic combination (g16) is equal to 1.

10. Method according to one of Claims 1 to 9, characterised in that for the operator (10) to perform, in its second mode of functioning, a subtraction between the two numbers (A15 A14...A0, B15 B14...B0) each formed by the bits of one of the N-bit operands whose rank is lower than that of the selection cell (116) and an addition between the two numbers (A32 A31...A17, B32 B31...B17) each formed by the bits of one of the N-bit operands whose rank is higher than that of the selection cell (116), each of the cells (100 to 115) of the preconditioning circuit (11) whose rank is lower than that of the selection cell (116) is controlled so that its first logic combination (p0 to p15) is obtained by an exclusive OR logic operation between the bit of corresponding rank (A0 to A15) of a first N-bit operand and the inverse of the bit of corresponding rank (B0 to B15) of the second N-bit operand and so that its second logic combination (g0 to g15) is obtained by an AND logic operation between the bit of corresponding rank (A0 to A15) of the first N-bit operand and the inverse of the bit of corresponding rank (B0 to B15) of the second N-bit operand, each of the cells (117 to 132) of the preconditioning circuit (11) whose rank is higher than that of the selection cell (116) is controlled so that its first logic combination (p17 to p32) is obtained by an exclusive OR logic operation between the two bits of corresponding rank (A17, B17 to A32, B32) of the two N-bit operands and so that its second logic combination (g17 to g32) is obtained by an AND logic operation between the two bits of corresponding rank (A17, B17 to A32, B32) of the N-bit operands, and the selection cell (116) is controlled so that its logic combinations (p16, g16) are equal to 0.

11. Method according to one of Claims 1 to 10, characterised in that, for the operator (10) to perform logic operations between the individual bits of a first N-bit operand and the individual bits of the second N-bit operand, the cells (100 to 132) of the preconditioning circuit (11) are controlled so that their second logic combinations (g0 to g32) are all equal to a predetermined value which is also allocated to the incoming carry-over bit (Cin), the carry-over bits (C0 to C32) produced by the carry-over generator (12) then all also having this predetermined value.

12. Arithmetic unit, comprising an operator (10) suitable for receiving two N-bit operands (A32 A31...A0, B32 B31...B0) and producing an N-bit result (S32 S31...S0), the operator (10) including a preconditioning circuit (11), a carry-over generator (12) and a summing circuit (13) mounted in cascade, in which the preconditioning circuit (11) comprises N cells (100 to 132) mounted in parallel, each of these N cells receiving two bits of the same rank (A0, B0 to A32, B32) from the two N-bit operands and producing first and second logic combinations (p0, g0 to p32, g32), of these two bits of the same rank determined by control signals (NP0 to NP3, NG0 to NG3), in which the carry-over generator (12) receives the logic combinations coming from the preconditioning circuit and an incoming carry-over bit (Cin) and calculates N carry-over bits (C0 to C32), and in which the summing circuit (13) comprises N constituent adders (200 to 232) mounted in parallel, each of these N constituent adders receiving one of the first logic combinations (p0 to p32) coming from a corresponding cell in the preconditioning circuit and one of the carry-over bits (Cin, C0 to C31) coming from the carry-over generator and producing one of the bits (S0 to S32) of the N-bit result by performing an exclusive OR logic operation between this first logic combination (p0 to p32) and this carry-over bit (Cin, C0 to C31),
characterised in that, n and m designating integers such that n + 1 + m = N, the first n bits (A0 to A15, B0 to B15) of the two N-bit operands are supplied to the corresponding cells (100 to 115) of the preconditioning circuit (11) by means of two n-bit input registers (1, 2), the last m bits (A17 to A32, B17 to B32) of the two N-bit operands are supplied to the corresponding cells (117 to 132) of the preconditioning circuit (11) by means of two m-bit input registers (3, 4), the first n bits (S0 to S15) of the N-bit result are addressed to an n-bit output register (5) by the corresponding constituent adders (200 to 215) of the summing circuit (13), and the last m bits (S17 to S32) of the N-bit result are addressed to an m-bit output register (6) by

17

the corresponding constituent adders (217 to 232) of the summing circuit (13), and in that the (n+1)th cell of the preconditioning circuit (11) is a selection cell (116) for selectively controlling two modes of functioning of the operator (10), namely a first mode of functioning in which the number with $n + m = N-1$ bits (S32 S31...S17 S15 S14...S0) formed by the combining of the bits of the two output registers (5, 6) is the result of an operation performed on the two numbers with $n + m = N-1$ bits (A32 A31...A17 A15 A14...A0, B32 B31...B17 B15 B14...B0) each formed by the combining of the bits of an n-bit input register (1, 2) and the bits of an m-bit input register (3, 4), and a second mode of functioning in which the two numbers (S15 S14...S0, S32 S31...S17) formed respectively by the bits of the n-bit output register (5) and the bits of the m-bit output register (6) are the results of two operations performed in parallel respectively on the two numbers (A15 A14...A0, B15 B14...B0) each formed by the bits of one of the two n-bit input registers (1, 2) and on the two numbers (A32 A31...A17, B32 B31...B17) each formed by the bits of one of the two m-bit input registers (3, 4).

13. Arithmetic unit according to Claim 12, characterised in that N is odd and $n = m = (N - 1)/2$.

14. Arithmetic unit according to Claim 13, in which $N = 33$.

FIG_1

EP 0 577 483 B1

FIG. 2

EP 0 577 483 B1